# EUROPÄISCHE PATENTANMELDUNG

(11) **EP 3 488 702 A1**
(43) Veröffentlichungstag der Anmeldung: **29.05.2019**
(21) Anmeldenummer: 17203252.6
(22) Anmeldetag: 23.11.2017
(51) Int. Cl.: A23C 1/12, A23C 7/02, C02F 103/32

(54) **VERFAHREN ZUR VERMINDERUNG DES ANFALLS VON MISCHPHASEN BEI DER KONZENTRIERUNG VON MILCHSTRÖMEN**

(71) Anmelder: DMK Deutsches Milchkontor GmbH, 27404 Zeven (DE)
(72) Erfinder: STADLER, Christian, 27404 Zeven (DE)
(74) Vertreter: Fabry, Bernd

(57) **Zusammenfassung**

Vorgeschlagen wird ein Verfahren zur Verminderung des Anfalls an Mischphasen bei der Konzentrierung von Milchströmen, umfassend die Schritte
(i) Bereitstellen von mindestens einem Eindampfungsreaktor;
(ii) Bereitstellen von mindestens zwei Stapelgefäßen, die jeweils einzeln von dem Eindampfungsreaktor oder den Eindampfungsreaktoren angesteuert werden können;

wobei man wie folgt verfährt:
(a) kontinuierliches Aufkonzentrieren eines Milchstroms in einem Eindampfungsreaktor R1 und Förderung des so erhaltenen Konzentrats in das erste Stapelgefäß V1, welches diskontinuierlich entleert und das darin enthaltene Konzentrat weiterverarbeitet wird;
(b) Erhöhen der Leistung des Eindampfungsreaktors R1 dergestalt, dass das anfallende Konzentrat eine höhere Trockenmasse aufweist;
(c) Abschalten, Spülen und Ausfahren des Eindampfungsreaktors R1 mit Wasser und anschließend
(d) Förderung des durch das Spülwasser verdünnten Konzentrats in ein weiteres Stapelgefäß V3, in dem die so erhaltene Mischphase MP2 gesammelt und dann weiterverarbeitet oder entsorgt wird.

## Beschreibung

### GEBIET DER ERFINDUNG

Die Erfindung befindet sich auf dem Gebiet der Milchindustrie und betrifft ein Verfahren zur Verminderung der Abfallmengen bei der Konzentrierung von Milchströmen, insbesondere von Magermilch.

### STAND DER TECHNIK

Einer der wichtigsten Prozessschritte in der Milchindustrie ist die Konzentrierung von Milchströmen, d.h. das Abtrennen von Wasser. Ziel ist es, Konzentrate mit etwa 50 Gew.-% Trockenmasse herzustellen, die mit vermindertem Aufwand gelagert und transportiert werden können. Da die Konzentrierung im Bereich von etwa 100 °C erfolgt, die Herstellung von Turmpulvern jedoch deutlich höhere Temperaturen erfordert, sind solch Konzentrate auch mit deutlich geringerem Gesamtenergiesatz zu trocknen.

Ein typisches Beispiel, welches das Problem, das Gegenstand der vorliegenden Erfindung ist, illustriert, ist die Herstellung von Magermilchkonzentraten. In einem ersten Schritt wird Rohmilch von Feststoffen befreit und entrahmt, ehe die so erhaltene Magermilch, die eine Trockenmasse von etwa 10 Gew.-% aufweist auf etwa 30 bis 40 Gew.-% vorkonzentriert, gestapelt und anschließend bis auf etwa 50 Gew.-% hochkonzentriert wird.

Die Konzentrate können dann weiterverarbeitet werden, beispielsweise zu entsprechenden Turmpulvern. Die Konzentrierung findet üblicherweise in Eindampfreaktoren statt ("Eindampfern"), bei denen in der Regel die Brüden mechanisch verdichtet und dann in die entsprechenden Stapelgefäßen, die mehrere tausend Liter Produkt fassen können, kondensiert werden. Die Vorlagen dienen üblicherweise dazu, die Trockentürme zu speisen.

Allerdings sind die Reaktoren für eine Verkeimung anfällig, da sie bei Temperaturen arbeiten, in denen insbesondere thermophile Keime ein starkes Wachstum zeigen. Die Reaktoren müssen daher nach relativ kurzen Fahrperioden von 6 bis 12 Stunden abgeschaltet und aufwendig gereinigt werden. Dabei wird die im Reaktor noch befindliche Menge Konzentrat mit heißem Wasser ausgeschoben, was dazu führt, dass sich eine so genannte Mischphase bildet, die letztlich wieder nur eine Trockenmasse von 35 bis 40 Gew.-% aufweist. Ausgehend von einem Durchsatz von typisch 15.000 Litern/Tag und einem zwei- bis dreimaligen Reinigungsstillstand, fallen pro Anlage täglich 2.000 bis 3.000 kg Mischphase an. Üblicherweise werden Paare von Eindampfreaktoren eingesetzt, d.h. immer dann wenn der eine abgeschaltet wird lenkt man den Milchstrom um und setzt den zweiten Reaktor in Gang, so dass diese stets versetzt arbeiten und kontinuierlich produziert werden kann.

Die Mischphasen werden gesammelt, jedoch ist ihre Verwertung bedingt durch längere Lagerung ("Stapelung") und dabei häufig auftretenden physikalischen und bakteriologischen Veränderungen problematisch. In der Regel taugen die Mischphasen allenfalls zur Herstellung von niedrigpreisigen Produkten für die Tierernährung; häufig müssen sie auch schlicht entsorgt werden.

Es liegt auf der Hand, dass die Verminderung der Menge an schwer verwertbaren Mischphasen wünschenswert ist und schon eine geringfügige Optimierung infolge der großen Anfallsmengen sofort zu einer deutlichen Ersparnis führt, also die Ökonomie des Verfahrens erheblich verbessert.

Die Aufgabe der vorliegenden Erfindung hat darin bestanden, den oben geschilderten Nachteilen des Stands der Technik abzuhelfen und ein entsprechend verbessertes Verfahren zur Verfügung zu stellen.

### BESCHREIBUNG DER ERFINDUNG

Die vorliegende Erfindung betrifft ein Verfahren zur Verminderung des Anfalls an Mischphasen bei der Konzentrierung von Milchströmen, umfassend die Schritte
(i) Bereitstellen von mindestens einem Eindampfungsreaktor;
(ii) Bereitstellen von mindestens zwei Stapelgefäßen, die jeweils einzeln von dem Eindampfungsreaktor oder den Eindampfungsreaktoren angesteuert werden können;
wobei man wie folgt verfährt:
(a) kontinuierliches Aufkonzentrieren eines Milchstroms mit einer Trockenmasse von etwa 30 bis etwa 40 Gew.-% in einem Eindampfungsreaktor R1 auf eine Trockenmasse von etwa 50 Gew.-% und Förderung des so erhaltenen Konzentrats über eine Fahrperiode von etwa 5 bis etwa 15 Stunden in das erste Stapelgefäß V1, welches diskontinuierlich entleert und das darin enthaltene Konzentrat weiterverarbeitet wird;
(b) Erhöhen der Leistung des Eindampfungsreaktors R1 maximal 2 Stunden vor dem vorgesehenen Ende der jeweiligen Fahrperiode dergestalt, dass das anfallende Konzentrat eine um etwa 0,5 bis 4 Gew.-% höhere Trockenmasse aufweist, so dass im Stapelgefäß V1 die Trockenmasse des Konzentrates auf mindestens 51 Gew.-% ansteigt;
(c) Abschalten, Spülen und Ausfahren des Eindampfungsreaktors R1 mit Wasser, wobei weiterhin so lange Konzentrat in das erste Stapelgefäß V1 gefördert wird, bis dort die Trockenmasse wieder auf etwa 50 Gew.-% abgesunken ist, und anschließend
(d) Förderung des durch das Spülwasser verdünnten Konzentrats in ein weiteres Stapelgefäß V3, in dem die so erhaltene Mischphase MP2 mit einer Trockenmasse von etwa 35 bis 40 Gew.-% gesammelt und dann weiterverarbeitet oder entsorgt wird.

Vereinfacht dargestellt, regelt also der Anlagenfahrer rechtzeitig bevor er den Reaktor wegen zu hoher Keimbelastung abschaltet und reinigt, die Leistung des Eindampfers hoch, so dass statt wie üblich ein Konzentrat mit etwa 50 Gew.-% Trockenmasse, nun für eine bestimmte Zeit ein Konzentrat mit einem höheren Gehalt, beispielsweise von 51 oder 52 Gew.-% erzeugt wird, was dazu führt, dass auch die Trockenmasse im Stapelgefäß, in welches der Reaktor hinein fährt, die Trockenmasse allmählich ansteigt. Dies kann gewissermaßen mit einem Knopfdruck erfolgen, da sich das An- und Abfahren der Reaktoren und das Wechseln der Vorlagen sowie die Bestimmung der Trockenmassen durch eine entsprechende Elektronik und eine zugehörige Programmierung vollautomatisch betätigen lassen.

Während also bisher mit dem Abschalten des Reaktors auch gleichzeitig das Stapelgefäß gewechselt werden musste, da das nun austretende noch im Reaktor befindliche Konzentrat durch das Spülwasser rasch verdünnt wird, kann im Sinne der vorliegenden Erfindung damit noch eine Weile gewartet werden, nämlich solange bis die Trockenmasse in der Vorlage, die ja zuvor angehoben wurde, durch das verdünnte Konzentrat wieder auf die Solltrockenmasse von mindestens 50 Gew.-% abgesunken ist. Auf diese Weise kann also vergleichsweise mehr wertvolles Konzentrat als Wertprodukt abgenommen und umgekehrt die Menge an wertloser Mischphase vermindert werden. Dabei spielt dann der zur Steigerung der Trockenmasse in der Vorlage kurzzeitig benötigte höhere Energiebedarf im Verdampfer keine Rolle.

Überraschenderweise wurde gefunden, dass sich mit dieser Verfahrensoptimierung die Menge an unerwünschter Mischphase etwa halbieren lässt, was hochgerechnet auf den Anfall einer Anlage mit einem Durchsatz von etwa 20.000 Litern pro Stunde bedeutet, dass rund 1500 kg Abfallprodukte vermieden werden. Zugleich wird eine Mischphase erzeugt, die eine deutlich geringere Trockenmasse besitzt, was zum einen weniger Verlust an Wertstoff bedeutet und zum anderen die Entsorgung erleichtert, da weniger Kosten anfallen.

### BEVORZUGTE AUSFÜHRUNGSFORMEN

In einer ersten bevorzugten Ausführungsform der Erfindung wird das oben beschriebene Verfahren dergestalt abgeändert, dass man im Anschluss an Schritt (c) wie folgt verfährt:
(d1) Förderung des durch das Spülwasser verdünnten Konzentrats in ein weiteres Stapelgefäß V2, bis dort eine Mischphase MP1 mit einer Trockenmasse von 10 bis 20 Gew.-% erreicht ist, und anschließend
(d2) Fördern des durch das Spülwasser verdünnten Konzentrats in ein Stapelgefäß V3, in dem die so erhaltene Mischphase MP2 mit einer Trockenmasse von etwa 5 bis 15 Gew.-% gesammelt und dann weiterverarbeitet oder entsorgt wird.

Vereinfacht ausgedrückt, wird das durch das Spülwasser verdünnte Konzentrat auf zwei Stapelgefäße verteilt, wobei das Gefäß V2 noch die vergleichsweise höher konzentrierte erste Menge Mischphase aufnimmt, die dann wie nachfolgend erläutert zu Wertprodukt weiterverarbeitet werden kann und nur die zweite nun stark verdünnte Mischphase in einer dritten Vorlage aufgefangen und dann letztlich entsorgt wird.

Diese erste bevorzugte Ausführungsform steht in engem Zusammenhang mit der folgenden zweiten bevorzugten Variante, bei der man wie folgt verfährt:
(a) kontinuierliches Aufkonzentrieren eines Milchstroms mit einer Trockenmasse von etwa 30 bis etwa 40 Gew.-% in einem Eindampfungsreaktor R1 auf eine Trockenmasse von etwa 50 Gew.-% und Förderung des so erhaltenen Konzentrats über eine Fahrperiode von etwa 5 bis etwa 15 Stunden in das erste Stapelgefäß V1, welches diskontinuierlich entleert und das darin enthaltene Konzentrat weiterverarbeitet wird;
(b) Erhöhen der Leistung des Eindampfungsreaktors R1 maximal 2 Stunden vor dem vorgesehenen Ende der jeweiligen Fahrperiode dergestalt, dass das anfallende Konzentrat eine um etwa 0,5 bis 4 Gew.-% höhere Trockenmasse aufweist, so dass im Stapelgefäß V1 die Trockenmasse des Konzentrates auf mindestens 51 Gew.-% ansteigt;
(c) Abschalten, Spülen und Ausfahren des Eindampfungsreaktors R1 mit Wasser, wobei weiterhin so lange Konzentrat in das erste Stapelgefäß V1gefördert wird, bis dort die Trockenmasse wieder auf etwa 50 Gew.-% abgesunken ist;
(d) Förderung des durch das Spülwasser verdünnten Konzentrats in ein zweites Stapelgefäß V2, bis dort eine Mischphase MP1 mit einer Trockenmasse von 10 bis 20 Gew.-% erreicht ist,
(e) gleichzeitig Anfahren eines zweiten Eindampfungsreaktor R2 und Umschalten des Milchstroms auf diesen Reaktor unter Aufkonzentrieren des Milchstroms wiederum auf eine Trockenmasse von etwa 50 Gew.-% und Förderung des so erhaltenen Konzentrats über eine Fahrperiode von etwa 5 bis etwa 15 Stunden in das zweite Stapelgefäß V2 unter Vermischung mit der dort ebenfalls hinein geförderten Mischphase MP1, wobei das Stapelgefäß V2 ebenfalls diskontinuierlich entleert und das darin enthaltene Konzentrat weiterverarbeitet wird; sowie
(f) Fördern des durch das Spülwasser verdünnten Konzentrats aus dem Eindampfungsreaktor R2 in ein Stapelgefäß V3, in dem die so erhaltene Mischphase MP2 mit einer Trockenmasse von etwa 5 bis 15 Gew.-% gesammelt und dann weiterverarbeitet oder entsorgt wird.

Diese Variante wendet das Verfahren also auf die beiden im Wechsel betriebenen Reaktoren an, wobei das zuvor beschriebene zweite Stapelgefäß mit der höher konzentrierten Mischphase als Stapelgefäß für den zweiten Reaktor dient. Bei der Befüllung steigt die Trockenmasse allmählich bis auf die gewünschten etwa 50 Gew.-% an, so dass in Summe durch diese Maßnahme weitere Mischphase, die sonst verworfen würde, wieder in Wertprodukt überführt wird. Als weitere Alternativ kommt in Betracht, auch den zweiten Eindampfer zu Beginn der Fahrperiode mit höherer Leistung zu fahren, so dass ein Konzentrat mit wiederum 51 bis 52 Gew.-% Trockenmasse hergestellt und in das Stapelgefäß V2 mit dem verdünnten Produkt wird, damit der Zielwert von 50 Gew.-% Trockenmasse auch in dieser Vorlage schneller wieder erreicht wird. Die höhere Leistung wird solange beibehalten, bis der Zielwert an Trockenmasse im Stapelgefäß V2 wieder erreicht ist.

### VERFAHRENSMASSNAHMEN

Die nachfolgenden weiteren Ausführungsformen betreffen Ausgestaltungen des Verfahrens, die alleine oder gemeinsam nicht nur typisch, sondern zugleich auch vorteilhaft sind, weil sie sich als produktionsökonomisch erwiesen haben.

Es beginnt damit, dass man in Schritt (b) die Leistung des Eindampfungsreaktors jeweils etwa 60 bis 90 Minuten vor dem vorgesehenen Ende der Fahrperiode heraufsetzt, wobei wie schon beschrieben die beiden Eindampfungsreaktoren R1 und R2 üblicherweise jeweils im Wechsel betrieben werden. Die Fahrperioden bis eine Reinigung wegen zunehmender Verkeimung erforderlich wird, betragen in der Regel 6 bis 12 Stunden.

Vorzugsweise wird Magermilch aufkonzentriert, es kommen aber auch andere Milchströme in Betracht, wobei der Durchsatz anlagenbedingt etwa 15.000 bis etwa 25.000 kg/h und die erhaltene Konzentratmenge etwa 10.000 bis etwa 20.000 kg/h beträgt.

Üblicherweise werden Eindampfungsreaktoren vom Typ der mechanischen Brüdenverdichter eingesetzt, die man bei einer Temperatur im Bereich von 60 bis 100 °C und vorzugsweise 70 bis 90 °C betreibt. Dabei wird die Leistung des Eindampfungsreaktors in Schritt (b) so vorzugsweise so angehoben, dass das anfallende Kondensat eine Trockenmasse von etwa 50,7 bis 52 Gew.-% und die Trockenmasse im Stapelgefäß V1 in Schritt (b) etwa 51 bis 52 Gew.-% beträgt. Die Trockenmasse der Mischphase MP1 im Stapelgefäß V2 wird dabei vorzugsweise auf etwa 15 bis etwa 20 Gew.-% eingestellt. Dabei können die Stapelgefäße ein Volumen von etwa 2.000 bis etwa 10.000 Litern aufweisen.

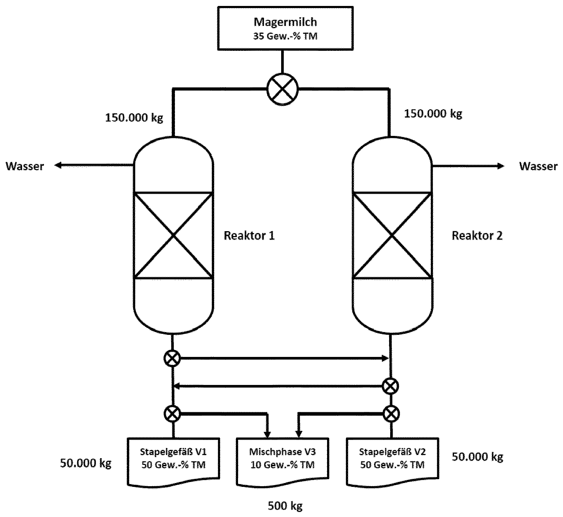

Das erfindungsgemäße Verfahren entsprechend der zweiten bevorzugten Ausführungsform ist schematisch in **Abbildung 1** wiedergegeben; die Mengen entsprechen einer Fahrperiode von jeweils 10 Stunden pro Reaktor. Gegenüber dem konventionellen Verfahren ohne zwischenzeitliche Anhebung der Trockenmassen in den Vorlagebehältern wird eine Verminderung der Menge an Mischphase um mehr als 50 % erzielt.

### BEISPIELE

### VERGLEICHSBEISPIEL V1

Eine Konzentrierungsanlage bestehend aus zwei Eindampfern mit mechanischer Brüdenverdichtung und einem Durchsatz von jeweils 15.000 Litern/h wurde abwechselnd mit einem kontinuierlichen Strom Magermilch mit einer Trockenmasse von 35 Gew.-% beschickt. Die Konzentrierung erfolgte bei 80 °C. Das Konzentrat mit einer Trockenmasse von 50 Gew.-% wurde kontinuierlich in eine Vorlage mit einem Fassungsvermögen von 5.000 Litern gefahren, die regelmäßig entleert wurde. Die Leistung der beiden Eindampfer betrug jeweils 10.000 Liter Kondensat pro Stunde.

Nach einer Fahrzeit von 10 Stunden wurde der erste Reaktor abgeschaltet und der Milchstrom auf den bereits vorgeheizten und betriebsbereiten zweiten Reaktor umgeleitet. Der erste Reaktor wurde mit einem Durchsatz von 10.000 Litern/h Wasser gespült und das noch im Reaktor vorhandene Konzentrat mit dem Spülwasser in eine frische Vorlage ausgedrückt. Es fielen 1.000 kg Mischphase mit einer Trockenmasse von 32 Gew.-% an, die anschließend entsorgt wurden.

Mit dem zweiten Reaktor wurde analog verfahren. Nach zwei Fahrperioden von jeweils 10 Stunden betrug die Menge an Mischphase 2.000 kg.

### BEISPIEL 1

Das Vergleichsbeispiel V1 wurde wiederholt, jedoch nach einer Fahrzeit von 9 Stunden die Leistung des ersten Reaktors soweit erhöht, dass Konzentrat mit einer Trockenmasse von 52,5 Gew.-% hergestellt wurde, welches sich mit dem bereits in der Vorlage befindlichen Konzentrat vermischte, so dass die Trockenmasse am Ende der 10stündigen Fahrperiode 51,2 Gew.-% betrug.

Nach Abschalten des Reaktors 1 und Umlenken des Milchstroms auf den zweiten Eindampfer, wurde der erste Reaktor wie oben beschrieben mit Wasser gespült, jedoch das sich durch das Spülwasser zunehmend verdünnende Konzentrat solange weiter in die erste Vorlage geleitet, bis dort die Trockenmasse wieder auf 50 Gew.-% abgesunken war. Erst dann wurde das verdünnte Konzentrat in eine zweite Vorlage umgeleitet und dort solange eingeleitet, bis die Trockenmasse einen Wert von 15 Gew.-% zu unterschreiten begann. Zu diesem Zeitpunkt wurde dann das nun stark verdünnte Konzentrat in eine dritte Vorlage umgeleitet, in der schließlich 500 kg einer Mischphase aufgefangen wurden, die nur noch eine Trockenmasse von 10 Gew.-% aufwies.

In der Zwischenzeit wurde die im zweiten Reaktor erzeugte Menge an Konzentrat in das zweite Stapelgefäß geleitet, in dem die Trockenmasse nun allmählich wieder bis auf 50 Gew.-% anstieg. Am Ende der beiden 10stündigen Fahrperioden waren 1.000 kg Mischphase mit 10 Gew.-% Trockenmasse angefallen.

## Patentansprüche

1. Verfahren zur Verminderung des Anfalls an Mischphasen bei der Konzentrierung von Milchströmen, umfassend die Schritte
(i) Bereitstellen von mindestens einem Eindampfungsreaktor;
(ii) Bereitstellen von mindestens zwei Stapelgefäßen, die jeweils einzeln von dem Eindampfungsreaktor oder den Eindampfungsreaktoren angesteuert werden können;
wobei man wie folgt verfährt:
(a) kontinuierliches Aufkonzentrieren eines Milchstroms mit einer Trockenmasse von etwa 30 bis etwa 40 Gew.-% in einem Eindampfungsreaktor R1 auf eine Trockenmasse von etwa 50 Gew.-% und Förderung des so erhaltenen Konzentrats über eine Fahrperiode von etwa 5 bis etwa 15 Stunden in das erste Stapelgefäß V1, welches diskontinuierlich entleert und das darin enthaltene Konzentrat weiterverarbeitet wird;
(b) Erhöhen der Leistung des Eindampfungsreaktors R1 maximal 2 Stunden vor dem vorgesehenen Ende der jeweiligen Fahrperiode dergestalt, dass das anfallende Konzentrat eine um etwa 0,5 bis 4 Gew.-% höhere Trockenmasse aufweist, so dass im Stapelgefäß V1 die Trockenmasse des Konzentrates auf mindestens 51 Gew.-% ansteigt;
(c) Abschalten, Spülen und Ausfahren des Eindampfungsreaktors R1 mit Wasser, wobei weiterhin so lange Konzentrat in das erste Stapelgefäß V1gefördert wird, bis dort die Trockenmasse wieder auf etwa 50 Gew.-% abgesunken ist, und anschließend
(d) Förderung des durch das Spülwasser verdünnten Konzentrats in ein weiteres Stapelgefäß V3, in dem die so erhaltene Mischphase MP2 mit einer Trockenmasse von etwa 35 bis 40 Gew.-% gesammelt und dann weiterverarbeitet oder entsorgt wird.

2. Verfahren nach Anspruch 1, **dadurch gekennzeichnet, dass** man im Anschluss an Schritt (c) wie folgt verfährt:
(d1) Förderung des durch das Spülwasser verdünnten Konzentrats in ein weiteres Stapelgefäß V2, bis dort eine Mischphase MP1 mit einer Trockenmasse von 10 bis 20 Gew.-% erreicht ist, und anschließend
(d2) Fördern des durch das Spülwasser verdünnten Konzentrats in ein Stapelgefäß V3, in dem die so erhaltene Mischphase MP2 mit einer Trockenmasse von etwa 5 bis 15 Gew.-% gesammelt und dann weiterverarbeitet oder entsorgt wird.

3. Verfahren nach mindestens einem der Ansprüche 1 und/oder 2, **dadurch gekennzeichnet, dass** man wie folgt verfährt:
(a) kontinuierliches Aufkonzentrieren eines Milchstroms mit einer Trockenmasse von etwa 30 bis etwa 40 Gew.-% in einem Eindampfungsreaktor R1 auf eine Trockenmasse von etwa 50 Gew.-% und Förderung des so erhaltenen Konzentrats über eine Fahrperiode von etwa 5 bis etwa 15 Stunden in das erste Stapelgefäß V1, welches diskontinuierlich entleert und das darin enthaltene Konzentrat weiterverarbeitet wird;
(b) Erhöhen der Leistung des Eindampfungsreaktors R1 maximal 2 Stunden vor dem vorgesehenen Ende der jeweiligen Fahrperiode dergestalt, dass das anfallende Konzentrat eine um etwa 0,5 bis 4 Gew.-% höhere Trockenmasse aufweist, so dass im Stapelgefäß V1 die Trockenmasse des Konzentrates auf mindestens 51 Gew.-% ansteigt;
(c) Abschalten, Spülen und Ausfahren des Eindampfungsreaktors R1 mit Wasser, wobei weiterhin so lange Konzentrat in das erste Stapelgefäß V1gefördert wird, bis dort die Trockenmasse wieder auf etwa 50 Gew.-% abgesunken ist;
(d) Förderung des durch das Spülwasser verdünnten Konzentrats in ein zweites Stapelgefäß V2, bis dort eine Mischphase MP1 mit einer Trockenmasse von 10 bis 20 Gew.-% erreicht ist,
(e) gleichzeitig Anfahren eines zweiten Eindampfungsreaktor R2 und Umschalten des Milchstroms auf diesen Reaktor unter Aufkonzentrieren des Milchstroms wiederum auf eine Trockenmasse von etwa 50 Gew.-% und Förderung des so erhaltenen Konzentrats über eine Fahrperiode von etwa 5 bis etwa 15 Stunden in das zweite Stapelgefäß V2 unter Vermischung mit der dort ebenfalls hinein geförderten Mischphase MP1, wobei das Stapelgefäß V2 ebenfalls diskontinuierlich entleert und das darin enthaltene Konzentrat weiterverarbeitet wird; sowie
(f) Fördern des durch das Spülwasser verdünnten Konzentrats aus dem Eindampfungsreaktor R2 in ein Stapelgefäß V3, in dem die so erhaltene Mischphase MP2 mit einer Trockenmasse von etwa 5 bis 15 Gew.-% gesammelt und dann weiterverarbeitet oder entsorgt wird.

4. Verfahren nach mindestens einem der Ansprüche 1 bis 3, **dadurch gekennzeichnet, dass** man in Schritt (b) die Leistung des Eindampfungsreaktors jeweils etwa 60 bis 90 Minuten vor dem vorgesehenen Ende der Fahrperiode heraufsetzt.

5. Verfahren nach mindestens einem der Ansprüche 1 bis 4, **dadurch gekennzeichnet, dass** die beiden Eindampfungsreaktoren R1 und R2 jeweils im Wechsel betrieben werden.

6. Verfahren nach mindestens einem der Ansprüche 1 bis 5, **dadurch gekennzeichnet, dass** man den Eindampfungsreaktor bzw. die Eindampfungsreaktoren jeweils über eine Fahrperiode von 6 bis 12 Stunden betreibt.

7. Verfahren nach mindestens einem der Ansprüche 1 bis 6, **dadurch gekennzeichnet, dass** man Magermilch aufkonzentriert.

8. Verfahren nach mindestens einem der Ansprüche 1 bis 7, **dadurch gekennzeichnet, dass** man Milchströme mit einem Durchsatz von etwa 15.000 bis etwa 25.000 kg/h aufkonzentriert.

9. Verfahren nach mindestens einem der Ansprüche 1 bis 8, **dadurch gekennzeichnet, dass** man vom Eindampfungsreaktor Kondensat in einer Menge von etwa 10.000 bis etwa 20.000 kg/h abnimmt.

10. Verfahren nach mindestens einem der Ansprüche 1 bis 9, **dadurch gekennzeichnet, dass** man Eindampfungsreaktoren vom Typ der mechanischen Brüdenverdichter einsetzt.

11. Verfahren nach mindestens einem der Ansprüche 1 bis 10, **dadurch gekennzeichnet, dass** man die Eindampfungsreaktoren bei einer Temperatur im Bereich von 60 bis 100 °C betreibt.

12. Verfahren nach mindestens einem der Ansprüche 1 bis 11, **dadurch gekennzeichnet, dass** man die Leistung des Eindampfungsreaktors in Schritt (b) so anhebt, dass das anfallende Kondensat eine Trockenmasse von etwa 50,7 bis 52 Gew.-% aufweist.

13. Verfahren nach mindestens einem der Ansprüche 1 bis 12, **dadurch gekennzeichnet, dass** man die Trockenmasse im Stapelgefäß V1 in Schritt (b) auf 51 bis 52 Gew.-% anhebt.

14. Verfahren nach mindestens einem der Ansprüche 2 bis 13, **dadurch gekennzeichnet, dass** man die Trockenmasse der Mischphase MP1 im Stapelgefäß V2 auf etwa 15 bis etwa 20 Gew.-% einstellt.

15. Verfahren nach mindestens einem der Ansprüche 1 bis 14, **dadurch gekennzeichnet, dass** man den zweiten Eindampfungsreaktor zu Beginn der Fahrzeit mit höherer Leistung betreibt, so dass ein Konzentrat mit einer Trockenmasse von 51 bis 52 Gew.-% erhalten und dann im Stapelgefäß V2 mit dem verdünnten Konzentrat vermischt wird.
